# FASCICULE DE BREVET EUROPEEN

(11) **EP 1 828 062 B1**
(45) Date de publication et mention de la délivrance du brevet: **03.02.2016**
(21) Numéro de dépôt: 05826592.7
(22) Date de dépôt: 15.12.2005
(51) Int. Cl.: C02F 1/467, C02F 1/76, C02F 1/72, C02F 103/22, C02F 103/02

(54) **PROCEDE DE TRAITEMENT DE L'EAU**
VERFAHREN ZUR BEHANDLUNG VON WASSER
METHOD FOR TREATING WATER

(30) Priorité: 16.12.2004 FR 0413435
(43) Date de publication de la demande: 05.09.2007
(73) Titulaire: Analyses Mesures Pollutions (A.M.P), 80200 Doingt (FR); Routier, Thierry, 80140 Foucaucourt Hors Nesle (FR)
(72) Inventeur: PEENAERT, Eugène, F-80200 Doingt Flamicourt (FR)
(74) Mandataire: Balesta, Pierre
(86) Numéro de dépôt international: PCT/FR2005/003150
(87) Numéro de publication internationale: WO 2006/064135

(56) Documents cités:
- CH-A- 605 421
- US-A- 6 045 707
- US-B1- 6 284 144
- PATENT ABSTRACTS OF JAPAN vol. 2000, no. 04, 31 août 2000 (2000-08-31) & JP 2000 005755 A (KONICA CORP), 11 janvier 2000 (2000-01-11)

## Description

La présente invention se rapporte de manière générale au domaine du traitement de l'eau. En particulier, la présente invention a trait à un procédé de traitement électrolytique d'effluents en présence d'ions oxydants.

De nombreux secteurs industriels et collectifs utilisent de l'eau en grande quantité et cette eau se retrouve contaminée pendant le processus d'utilisation. L'eau est un élément essentiel de la plupart des grandes entreprises de transformation de produits alimentaires. Après avoir été utilisée, la plus grande partie cette eau de procédé est retournée au milieu naturel. Cette eau peut être chargée en matières organiques et elle devient dès lors une source de pollution importante pour le cours d'eau ou le milieu qui la reçoit.

Parmi les différents types d'eaux usées, l'eau des abattoirs est sans doute une des plus chargées en matières organiques et en micro-organismes pathogènes. Dans un abattoir, l'eau usée résulte des eaux de process d'abattage, des eaux de nettoyage, des eaux de condensation et des eaux de refroidissements.

Dans d'autres secteurs industriels, l'eau est utilisée pour refroidir un produit ou les équipements d'un procédé de fabrication, notamment au moyen de tours de refroidissement. Dans les tours de refroidissement, de l'eau est perdue par évaporation, par la purge du système et sous forme d'aérosol (brouillard de gouttelettes) ou entraînement vésiculaire.

Les aérosols sont la part d'eau qui circule, entraînée dans les tours de refroidissement, sous forme de petites gouttelettes et qui se dispersent facilement dans l'environnement. Cette eau contient beaucoup de minéraux dissous, de produits chimiques et de micro-organismes incluant la legionella et d'autres bactéries.

De nombreux procédés de traitement d'effluents sont connus à ce jour.

Certains procédés de traitement mettent en oeuvre des techniques électrolytiques de type électro-floculation, électro-flottation ou électrocoagulation.

Ces méthodes de traitement permettent notamment de décomposer des substances chimiques polluantes et de débarrasser l'eau d'éléments solides en suspension. Ces procédés sont donc plus ou moins efficaces pour épurer chimiquement les effluents sans toutefois éliminer quantitativement les micro-organismes, pathogènes ou non, présents également dans les eaux usées. Par ailleurs, des passages répétés ou des séjours de plusieurs heures de l'effluent dans la cuve de traitement sont nécessaires afin d'obtenir des résultats notables, entraînant ainsi des temps de traitement longs et un surcoût énergétique de l'opération.

Le document CH-605.421 divulgue un procédé de traitement pour la désinfection des eaux usées telles que les eaux industrielles.

La présente invention se propose de pallier les inconvénients dus aux procédés de traitement des effluents connus. Le but de la présente invention est de proposer un procédé de traitement d'un effluent ou d'une eau résiduelle chargée notamment en micro-organismes, permettant d'éliminer quantitativement les déchets chimiques ainsi que lesdits micro-organismes, lors d'un passage unique de l'effluent dans la cuve de traitement. L'utilisation de ce procédé permet notamment de diminuer l'impact sur l'environnement des eaux très polluées, telles que les eaux de récupération, mais aussi de rendre potables de point de vue microbiologique les eaux moins polluées, telles que l'eau des rivières.

La présente invention concerne un procédé selon la revendication 1 :
Selon diverses réalisations, le procédé de traitement présente les caractères suivants, le cas échéants combinés :
   - ledit agent de traitement est sélectionné dans le groupe des agents oxydants comprenant :
      - XO⁻, XO⁻₃, XO⁻₄ où X est un halogène;
      - eau oxygénée ;
      - ou autre composé oxydant capable de former un peroxyde et de libérer un équivalent oxydant à celui de 0,5 à 3 ml d'une solution d'eau de javel à 9° chlorométrique ;
   - l'effluent est additionné :
      - d'eau de javel de commerce, à 9° chlorométrique, ou
      - d'eau oxygénée à 110 volumes, diluée 22 fois,
      à raison de 0,5 ml à 3 ml par litre d'eau ;
   - lesdites électrodes sont métalliques ou en carbone ;
   - on applique un courant continu de tension comprise entre 1 et 40 V entre électrodes voisines;
   - le courant continu est appliqué pendant une durée variable selon la nature des effluents ;
   - l'effluent effectue un passage unique entre les électrodes de la cuve ;
   - les microorganismes inactivés par ce traitement sont des bactéries et/ou des virus.

D'autres caractéristiques et avantages apparaîtront à la lecture des exemples de réalisation suivants.

### Exemple 1. Essais de traitement des eaux de récupération provenant des abattoirs

Un volume déterminé d'effluent provenant des abattoirs est traité selon le procédé de l'invention :
- l'effluent est introduit dans une cuve comportant deux électrodes en fer ;
- le pH dudit effluent étant, si besoin est, amené à une valeur comprise entre 6 et 10, ledit effluent est additionné d'une quantité donnée d'agent de traitement. Comme agent de traitement est utilisé soit de l'eau de javel à 9° chlorométrique du commerce, soit du peroxyde d'hydrogène à 110 volumes, dilué 22 fois, à raison de 0,5 ml ; 1,0 ml ou 1,5 ml par litre d'effluent ;
- on applique entre lesdits électrodes un courant continu (5 à 40 V) pendant une durée déterminée : 15 minutes ou 30 minutes.

L'eau est soumise à une analyse microbiologique, avant et après traitement. L'analyse microbiologique des échantillons d'eau s'effectue à l'aide de boîtes de pétri remplies d'un milieu de culture approprié (PCA), permettant notamment la croissance de bactéries, comme suit :
- un volume déterminé d'effluent est déposé à la surface dudit milieu de culture ;
- les boîtes de pétri sont incubées à 30°C pendant 24 à 48h;
- à la fin de la période d'incubation, le développement éventuel de colonies est observé visuellement et est exprimé en nombre d'unités formant colonies (UFC) par ml.

Les conditions de travail ainsi que les résultats obtenus sont présentés ci-dessous dans le tableau 1. Le terme « indénombrable » utilisé dans la colonne de droite signifie que le nombre d'unités formant colonies observées était très élevé, ne permettant pas un dénombrement précis.

**Tableau 1**

| Essai | Eau de javel (ml) | Eau oxygénée (ml) | Temps de traitement (min) | UFC/0,5ml |
|---|---|---|---|---|
| A1 | - | - | 0 | Indénombrable |
| A2 | - | - | 15 | Indénombrable |
| A3 | - | - | 30 | 1200 |
| B1 | 0,5 | - | 0 | Indénombrable |
| B2 | 0,5 | - | 15 | 30 |
| B3 | 0,5 | - | 30 | 180 |
| C1 | 1,0 | - | 0 | Indénombrable |
| C2 | 1,0 | - | 15 | 5 |
| C3 | 1,0 | - | 30 | 16 |
| D1 | - | 0,5 | 0 | Indénombrable |
| D2 | - | 0,5 | 15 | 8 |
| D3 | - | 0,5 | 30 | 3 |
| E1 | - | 1,0 | 0 | Indénombrable |
| E2 | - | 1,0 | 15 | 200 |
| E3 | - | 1,0 | 30 | 50 |
| F1 | 1,5 | - | 0 | Indénombrable |
| F2 | 1,5 | - | 15 | 10 |
| F3 | 1,5 | - | 30 | 15 |
| G1 | - | 1,5 | 0 | Indénombrable |
| G2 | - | 1,5 | 15 | 8 |
| G3 | - | 1,5 | 30 | 2 |

Ces résultats montrent que le traitement d'une eau de récupération selon l'invention conduit à l'élimination substantielle des bactéries présentes dans ladite eau de récupération et ceci pour des temps de traitement de maximum 30 minutes. Les traitements sont les plus efficaces dans les conditions suivantes :
- pour des rapports de 0,5 ml et 1 ml d'eau de javel à 9° Cl par litre d'effluent et une durée de traitement de 15 min (essais B2 et C2, respectivement) ;
- pour des rapports de 0,5 ml et 1,5 ml d'eau oxygénée par litre d'effluent et une durée de traitement de 30 min (essais D3 et G3, respectivement).

### Exemple 2. Analyses microbiologiques de l'eau de récupération avant et après traitement

Des effluents provenant des abattoirs ou des tours de refroidissement ont été soumis, avant et après traitement selon l'invention (le courant continu étant appliqué pendant une durée comprise entre 10 et 30 minutes), à des analyses microbiologiques effectuées à l'Institut Pasteur de Lille (laboratoire de référence agréé pour l'analyse des eaux) et au Laboratoire Santé Environnement Hygiène de Lyon, respectivement. Les résultats obtenus sont présentés dans le tableau 2.

Ces résultats démontrent que le procédé de traitement des eaux de récupération contenant des microorganismes pathogènes, provenant notamment des abattoirs ou des tours de refroidissement, permet de réduire drastiquement, voire de supprimer, la teneur en microorganismes pathogènes.

**Tableau 2**

| Effluent | Paramètre | Méthode | Résultat avant traitement | Résultat après traitement |
|---|---|---|---|---|
| Eaux brutes d'abattoir | Bactériophages somatiques | ISO 10705-2:2000 | 3,14 x10⁴/ml | <0,5 /ml |
| | Bactériophages F-ARN | ISO 10705-1 :1995 | 86 /ml | <0,5 /ml |
| Eau tour de refroidissement | Legionella | Filtration | 65.000 UFC/l | <250 UFC/l |
| | dont Legionella pneumophila | Filtration | 65.000 UFC/l | <250 UFC/l |

### Exemple 3. Essais de traitement des eaux de rivière

Des échantillons d'eau de rivière (eau provenant de la Somme) ont été soumis, avant et après traitement selon l'invention, à des analyses bactériologiques sur boîtes de pétri. Ces analyses ont été effectuées par le Laboratoire Départemental d'Amiens. Les résultats obtenus sont présentés dans le tableau 3.

Ces résultats montrent que le traitement d'une eau de rivière selon l'invention, appliqué pendant une durée comprise entre 1 et 5 minutes, conduit à l'élimination quasi complète des microorganismes présents dans ladite eau et ceci pour des temps de traitement aussi courts qu'une minute et demi (essai A4) ou trois minutes (essai A5). Par contre, l'ajout d'eau de javel à de l'eau de rivière, en l'absence de traitement électrolytique, ne suffit pas de rendre potable de point de vue microbiologique cette dernière (essai A3).

**Tableau 3**

| Essai | Caractéristiques | Temps de traitement | Analyse bactério | Résultat |
|---|---|---|---|---|
| A | Eau brute | 0 | Tapis | |
| A1 | Eau brute | 1mm 30sec | 1 UFC | |
| A2 | Eau brute | 3min | 30 UFC | Non potable |
| A3 | Eau brute + 1ml eau javel | 0 | 6 UFC | |
| A4 | Eau brute + 1ml eau javel | 1min 30sec | 1 UFC | |
| A5 | Eau brute + 1ml eau javel | 3min | 0 UFC | Potable |

### Exemple 4. Essais de traitement des eaux comprenant des protozoaires

Des échantillons d'eau issue d'un bassin d'aération de la station communale de Chaulnes ont été observés au microscope, avant et après traitement selon l'invention. Ces observations ont relevé la présence de nombreux protozoaires actifs dans les échantillons d'effluent non traités.

Certains échantillons ont été introduits dans une cuve comportant deux électrodes puis ont été additionnés de l'eau de javel à raison de 1 ml/l ; un courant continu (20 V, 2 A) a été appliqué entre lesdites électrodes pendant une durée variable. Il a été constaté qu'au bout de 5 min de traitement, il en restait des protozoaires vivants. Par contre, tous les protozoaires étaient morts après 10 minutes de traitement selon l'invention.

Le procédé de traitement des eaux usées décrit présente de nombreux avantages :
- sa mise en oeuvre est simple et ne nécessite qu'un réacteur comprenant des électrodes métalliques ;
- les agents de traitement sont des produits usuels et bon marché du commerce, utilisés à dose faible.

## Revendications

1. Procédé de traitement d'un effluent contenant des microorganismes, éventuellement pathogènes, en vue de diminuer son impact sur l'environnement voire de le rendre potable, ledit effluent étant choisi parmi les eaux de récupération provenant des abattoirs ou des tours de refroidissement, les eaux chargées de protozoaires et les eaux de rivière, **caractérisé en ce qu'**il comprend les étapes suivantes :
i. on introduit l'effluent dans une cuve comportant des électrodes,
ii. on additionne l'effluent, à pH compris entre 6 et 10, d'une faible quantité d'un agent de traitement qui génère des ions oxydants, et
iii. on applique entre lesdites électrodes un courant continu pendant une durée déterminée,
ladite durée étant comprise entre 10 à 30 minutes pour les eaux de récupération provenant des abattoirs ou des tours de refroidissement,
ladite durée étant comprise entre 1 minute et 5 minutes pour les eaux de rivière,
ladite durée étant au maximum de 10 minutes pour les eaux chargées en protozoaires,
et **en ce que** ledit effluent est traité lors d'un passage unique dans ladite cuve de traitement et ledit agent de traitement est choisi parmi :
- l'eau de javel de commerce, à 9° chlorométrique, ou
- l'eau oxygénée à 110 volumes, diluée 22 fois,
à raison de 0,5 ml à 3 ml par litre d'effluent.

2. Procédé selon la revendication 1, **caractérisé en ce que** lesdites électrodes sont métalliques ou en carbone.

3. Procédé selon l'une ou l'autre des revendications 1 et 2, **caractérisé en ce qu'**on applique un courant continu d'une tension comprise entre 1 et 40 V entre électrodes voisines.

4. Procédé selon l'une quelconques des revendications 1 à 3, **caractérisé en ce que** les microorganismes inactivés par ce traitement sont des bactéries et/ ou des virus.

## Patentansprüche

1. Verfahren zur Behandlung eines Ausflusses, der insbesondere pathogene Mikroorganismen enthält, um seine Auswirkung auf die Umwelt zu verringern bzw. ihn trinkbar zu machen, wobei der Ausfluss unter den Brauchwässern, die von den Schlachthöfen oder Kühltürmen kommen, den mit Protozoen angereicherten Wässern und den Flusswässern ausgewählt ist, **dadurch gekennzeichnet, dass** es die folgenden Schritte umfasst:
i. Einleiten des Ausflusses in eine Wanne, umfassend Elektroden,
ii. Hinzufügen zu dem Ausfluss mit einem pH-Wert zwischen 6 und 10 einer geringen Menge eines Behandlungswirkstoffe, der oxidierende Ionen erzeugt, und
iii. Anlegen von Gleichstrom zwischen den Elektroden während einer bestimmten Dauer,
wobei die Dauer zwischen 10 bis 30 Minuten für die Brauchwässer, die von den Schlachthöfen oder Kühltürmen kommen, beträgt,
wobei die Dauer zwischen 1 Minute und 5 Minuten für die Flusswässer beträgt, wobei die Dauer maximal 10 Minuten für die mit Protozoen angereicherten Wässer beträgt,
und dass der Ausfluss während eines einzigen Durchgangs durch die Behandlungswanne behandelt wird, und der Behandlungswirkstoff ausgewählt ist unter:
- handelsüblichem Bleichmittel mit 9° Chlorionenkonzentration, oder
- Wasserstoffperoxid mit 110 Volumen, 22-mal verdünnt, in einem Verhältnis von 0,5 ml bis 3 ml pro Liter Ausfluss.

2. Verfahren nach Anspruch 1, **dadurch gekennzeichnet, dass** die Elektroden metallisch oder aus Kohlenstoff sind.

3. Verfahren nach dem einen oder dem anderen der Ansprüche 1 und 2, **dadurch gekennzeichnet, dass** ein Gleichstrom mit einer Spannung zwischen 1 und 40V zwischen benachbarten Elektroden angelegt wird.

4. Verfahren nach einem der Ansprüche 1 bis 3, **dadurch gekennzeichnet, dass** die durch diese Behandlung inaktivierten Mikroorganismen Bakterien und/oder Viren sind.

## Claims

1. A method for treating an effluent containing microorganisms, in particular pathogenic, in order to reduce its impact on the environment or even to make it drinkable, said effluent being chosen among: reclaimed waters from slaughter-houses or cooling towers, waters loaded with protozoa and river waters , **characterized in that** it comprises the following steps :
i. the effluent is introduced into a tank including electrodes,
ii. a small amount of a treatment agent which generates oxidizing ions, is added to the effluent, at a pH between 6 and 10, and
iii. a continuous current is applied between said electrodes for a determined period of time,
said period being between 10 and 30 minutes for reclaimed waters from slaughter-houses or cooling towers,
said period being between 1 to 5 minutes for river waters,
said period being of maximum 10 minutes for waters loaded with protozoa
and **in that** said effluent is treated by a single passage in said treatment tank and said treatment agent is selected from the group of :
- commercial Javel water at 9° chlorometric, or
- a hydrogen peroxide solution at 110 volumes, diluted 22 times, in an amount from 0.5 ml to 3 ml per liter of effluent.

2. The method according to claim 1, **characterized in that** said electrodes are metal or carbon.

3. The method according to any one of claim 1 or 2, **characterized in that** a continuous current of a voltage between 1 and 40V is applied between adjacent electrodes.

4. The method according to any one of claims 1 to 3, **characterized in that** the microorganisms inactivated by this treatment are bacteria and/or viruses.
